# NEW EUROPEAN PATENT SPECIFICATION

(11) **EP 0 440 429 B2**
(45) Date of publication and mention of the opposition decision: **09.12.1998**
(45) Mention of the grant of the patent: 03.05.1995
(21) Application number: 91300685.4
(22) Date of filing: 30.01.1991
(51) Int. Cl.: C08L 81/02

(54) **Polyphenylene sulfide resin composition**
Harzzusammensetzung aus Polyphenylensulfiden
Composition de poly(sulfure de phénylène)

(30) Priority: 02.02.1990 JP 22091/90
(43) Date of publication of application: 07.08.1991
(73) Proprietor: Tosoh Corporation, Shinnanyo-shi, Yamaguchi-ken, 746 (JP); Toso Susteel Co., Ltd., Minato-ku Tokyo (JP)
(72) Inventor: Hanayama, Kyoko, Yokkaichi-shi, Mie-ken (JP); Inoue, Hiroshi, Yokkaichi-shi, Mie-ken (JP)
(74) Representative: Kearney, Kevin David Nicholas

(56) References cited:
- EP-A- 0 405 269
- WO-A-86/03212
- JP-A-58 291 844
- JP-A-61 188 445
- US-A- 4 528 335
- PATENT ABSTRACTS OF JAPAN, vol. 12, no. 275 (C-516)[3122], 29th July 1988;& JP-A-63 056 559 (JAPAN SYNTHETIC RUBBER) 11-03-1988
- PATENT ABSTRACTS OF JAPAN, vol. 13, no. 134 (C-581)[3482], 4th April 1989;& JP-A-63 301 252 (UNITIKA) 08-12-1988

## Description

This invention relates to a polyphenylene sulfide resin composition and, in particular, to such a composition having an increased melt-crystallization temperature.

Polyphenylene sulfide materials are highly resistant to heat and chemicals, and use thereof for manufacturing a wide range of electrical and electronic parts as well as automotive parts has drawn a good deal of attention. The materials may be injection-molded, extrusion-molded or otherwise molded into various shaped articles including parts, films, sheets, fibers and the like. The resulting articles have been used in a wide range of applications where high heat and chemical resistance properties are required.

However, the polyphenylene sulfide materials have a problem that they show a low melt-crystallization temperature. Therefore, where they are molded, a lengthy cooling time is required before the molded product is demolded and hence a high cycle speed cannot be employed.

For solving the problems, it has been proposed, for example, to treat a polyphenylene sulfide material with a solution of an unoxidizing strong acid so as to render the material highly crystallizable [see, for example, Japanese Patent Public Disclosure (KOKAI) No. 63-63722] or to treat a polyphenylene sulfide material with organic solvents so as to render the material highly crystallizable [see, for example, Japanese Patent Public Disclosure (KOKAI) No. 63-149132]. However, these proposed techniques suffer from a disadvantage that they include an extra step for treating the material with a liquid or solvent.

It is an object of the invention to solve the problems and difficulties experienced with the known techniques and proposals.

Another object of the invention is to improve the crystallization characteristics of polyphenylene sulfide materials.

A further object of the invention is to provide a polyphenylene sulfide resin composition showing an increased melt-crystallization temperature.

Accordingly, the invention concerns a polyphenylene sulfide resin composition which comprises 61 - 70% by weight of a polyphenylene sulfide resin and 30 - 39% by weight of a polyamide containing tetramethylene adipamide structural unit, the polyphenylene sulfide and the polyamide being the sole polymeric components in the composition.

The invention will be described in more detail.

The polyphenylene sulfide (will be referred to as PPS hereinafter) materials which may be used in the invention are copolymers which contain at least 70 mole %, preferably at least 90 mole % of a recurring unit represented by: 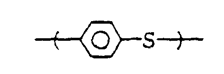 The copolymers may contain, in a proportion of less than 30 mole %, one or more recurring structural units selected from 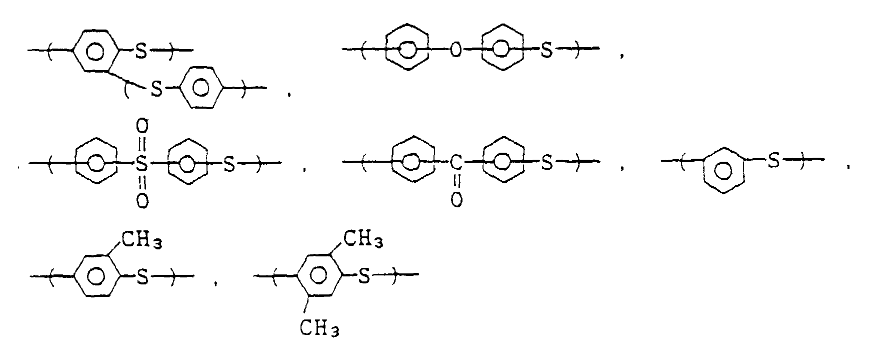 and the like.

Examples of the processes for preparing the PPS materials which may be mentioned include one comprising polymerization of a halogen-substituted aromatic compound, e.g. p-dichlorobenzene in the presence of sulfur and sodium carbonate: one comprising polymerization of such an aromatic compound in the presence of sodium sulfide, or sodium hydrosulfide with sodium hydroxide, or hydrogen sulfide with sodium hydroxide or a sodium aminoalkanoate, in a polar solvent; and one comprising self-condensation of p-chlorothiophenol. In particular, a process comprising reacting p-dichlorobenzene with sodium sulfide in an amide solvent, such as N-methyl pyrrolidone or dimethyl acetamide or in a sulfone solvent such as sulfolane is suitable. Various processes are known, for example, in U.S. Patent No. 2,513,188; Japanese Patent Publication (KOKOKU) Nos. 44-27671, 45-3368 and 52-12240; Japanese Patent Public Disclosure (KOKAI) No. 61-225217; U.S. Patent Nos. 3,274,165 and 1.160.660: Japanese Patent Publication (KOKOKU) No. 46-27255; and Belgian Patent No. 29437.

The PPS materials may be either in linear or branched form. The PPS material may be a mixture of linear PPS and branched PPS.

The PPS materials preferably have a melt viscosity in the range of from 10 to 50,000 poises as measured in a KOHKA-type flow tester with a die of 0.5 mm inner diameter and 2.0 mm length at 300°C under a load of 10 kg.

The polyamide materials which may be used in the invention are tetramethylene adipamide or copolymeric polyamides which contain tetramethylene adipamide unit as a main structural unit or mixtures thereof. The comonomers for use in preparation of the copolymeric polyamides may be selected from a wide range of compounds.

Typical examples of the comonomers for use in preparation of the polyamides which may be used in the invention include amino acids such as 6-aminocaproic, 11-aminoundecanoic, 12-aminododecanoic and para-aminomethyl benzoic acids and the like; ε-caprolactam; ω-laurolactam;diamines such as undecamethylene diamine, dodecamethylene diamine, 2,2,4- or 2.4,4-trimethylhexamethylene diamine, 5-methyl nonamethylene diamine, meta-xylylene diamine, paraxylylene diamine, 1,3-bis-(aminomethyl)cyclohexane, 1,4-bis-(aminomethyl)cyclohexane, 1-amino-3-aminomethyl-3,5,5-trimethyl cyclohexane, bis(4-aminocyclohexyl)methane, bis-(3-methyl-4-aminocyclohexyl)methane, 2,2-bis-(4-aminocyclohexyl)propane, bis-(aminopropyl)piperazine, aminoethyl piperazine and the like; and dicarboxylic acids such as adipic, suberic, azelaic, sebacic, dodecane dicarboxylic, terephthalic, isophthalic, 2-chloroterephthalic, 2-methyl terephthalic, 5-methyl isophthalic, 5-sodium sulfoisophthalic, hexahydroterephthalic, hexahydroisophthalic and diglycolic acids and the like. The polyamide used in the invention may be a mixture comprising a polyamide or polyamides that are prepared using the above-exemplified comonomers.

The polyamide containing tetramethylene adipamide unit as the main structural unit used in the invention may be prepared by any suitable known process, for example, preferably by providing, under specific reaction conditions, a prepolymer having a low content of cyclic terminal group and subjecting the resultant prepolymer to solid phase polymerization, for example under a steam atmosphere, so as to give a high viscosity polytetramethylene adipamide homopolymer or copolymer. Alternatively, the prepolymer may be preferably heated in a polar organic solvent such as 2-pyrrolidone or N-methyl pyrrolidone, so as to give the desired polyamide. The latter process is particularly preferred. The preparation of the suitable polyamides is disclosed, for example, in Japanese Patent Public Disclosure (KOKAI) Nos. 56-149430, 56-149431 and 58-83029. For the purpose of the invention, the polymerization degree of the polyamide is not critical. Usually, a polyamide having a relative viscosity in the range of 2.0 - 6.0 may be suitably selected for use in the invention.

Where the PPS content in the composition is less than 61% by weight, the chemical resistance properties of PPS will not be satisfactorily exhibited. On the other hand, if the content of polyamide in the composition is less than 0.1% by weight, then the polyamide will be less effective as nucleating agent for the PPS and the composition will not show an acceptably increased melt-crystallization temperature.

It has been found that the PPS-polyamide composition according to the invention show a melt crystallization temperature in a single peak form, when measured by the DSC method.

If desired, reinforcing fillers, for example, glass fibers, carbon fibers, ceramic fibers (e.g., alumina and the like fibers), aramide fibers, wholly aromatic polyester fibers, metallic fibers. potassium titanate whisker and the like may be incorporated in the present PPS composition. Further, inorganic fillers and organic and inorganic pigments may be incorporated. Examples of inorganic fillers include calcium carbonate, mica, talc, silica, barium sulfate, calcium sulfate, kaolin, clay, pyroferrite, bentonite, sericite, zeolites, nepheline,syenite, attapulgite, wollastonite, ferrites, calcium silicate, magnesium carbonate, dolomite, antimony trioxide, zinc oxide, titanium oxide, magnesium oxide, iron oxides, molybdenum disulfide, graphite, gypsum, glass beads, powdered glass, glass balloons, quartz, quartz glass, and mixtures thereof. Particular examples which may be mentioned include chopped glass fiber strand of a 1.5 - 12 mm length and a 3 - 24 µ diameter, milled glass fibers of a 3 - 8 µ diameter and glass flake or powder of a particle size of less than 325 mesh. (US Sieve Series which has openings 44 microns across)

In addition, plasticizers, mold release agents, silane or titanate coupling agents, lubricants, heat stabilizers, weathering agents, nucleating agents, blowing agents, rust-proofing agents, ion-trapping agents, flame-retardants and flame-proofing aids may also be incorporated, if desired.

The present PPS composition having an increased melt-crystallization temperature may be prepared, for example, by:
(a) mixing the ingredients together in a suitable mixer and kneading and extruding the mixture through an extruder into pellets; or
(b) extruding the pellets from (a) alone or after mixing with any additional ingredient or additive, through an injection-molding machine to give an article; or
(c) dissolving the ingredients in a solvent and heating the solution with stirring to give a composition.

These procedures may be effected in any suitable conventional apparatus such as Banbury mixer, kneader, autoclave or the like.

The melt-crystallization temperature of the composition according to the invention is determined in a differential scanning calorimeter in which a molten sample is cooled at a rate of 5°C/min. The temperature corresponding to an exothermic peak that is observed during the cooling cycle is determined to be the "melt-crystallization temperature".

The PPS resin compositions of improved melt-crystallization behavior are useful for providing various shaped or molded articles by injection molding,sheet forming, vacuum forming, profile forming, foam molding and other techniques.

### Example

The invention will be illustrated in more detail with reference to the following non-limiting Examples.

### Reference Example 1

A 15-ℓ-capacity autoclave provided with a stirrer was charged with 5,000 g of N-methyl-2-pyrrolidone (NMP) and 1,898 g (14.8 moles) of sodium sulfide (Na₂S•2.9H₂O). The mixture was heated to 205°C with stirring to distill off 420 g of water with 5 g of NMP. Thereafter, 2,132 g (14.5 moles) of p-dichlorobenzene was added to the mixture which was then allow to react at 250°C for 3 hours. Upon completion of the reaction, the reaction mixture was cooled to room temperature and centrifuged to isolate the product polymer. The conversion of dichlorobenzene was found to be 98.5%. The isolated polymer was repeatedly washed with warm water and dried overnight at 100°C under vacuum. The thus resulting PPS showed a melt viscosity of 300 poises.

The PPS was further thermally treated at 250°C for 5 hours to increase the melt viscosity up to 2,000 poises.

### Examples 1 - 3 and Comparative Examples 1 - 3

Samples of the PPS from the Reference Example 1 were compounded with various proportions of a commercially available 4,6-nylon. In Comparative Example 3, the PPS material was compounded with a commercially available 6,6-nylon. Melt-crystallization temperatures of the respective compositions were determined by the DSC method. The results are shown in Table 1 below.

**Table 1**

| | Composition (wt.%) | | Melt-crystallization temperature (°C) | Remarks |
|---|---|---|---|---|
| | PPS | Polyamide | | |
| Comp. Ex. 4 | 90 | 4,6-Ny¹⁾ 10 | 235 | single peak |
| Comp. Ex. 5 | 80 | 20 | 237 | single peak |
| Ex. 1 | 70 | 30 | 245 | single peak |
| Comp. Ex. 1 | 100 | - | 226 | |
| 2 | - | 100 | 264 | |
| 3 | 80 | 6,6-Ny²⁾ 20 | 230, 208 | two peaks |

| | | | | |
|---|---|---|---|---|
| 1) Nylon 4,6 (available from DSM corporation) having a relative viscosity of 3.2 as measured at a concentration of 1 g/dℓ in 96% sulfuric acid at 25°C. | | | | |
| 2) Nylon 6,6 available under trade name "Amilan" CM 3006 from Toray Corporation. | | | | |

As described above, according to the present invention, a PPS resin composition having an increased melt-crystallization temperature is provided. Such an extent of improvement in the melt-crystallization behavior has never been achieved by prior art. Thus, the molding cycle time may be significantly reduced with the present PPS composition. The PPS composition provides, when molded or shaped, products having a good combination of heat resistance, impact resistance, processability fabricability, chemical resistance and other physical properties.

## Claims

1. A polyphenylene sulfide resin composition which comprises 61 - 70% by weight of a polyphenylene sulfide resin and 30 - 39% by weight of a polyamide containing tetramethylene adipamide structural unit, the polyphenylene sulfide and the polyamide being the sole polymeric components in the composition.

2. A resin composition as claimed in Claim 1 wherein the polyphenylene sulfide resin has a melt viscosity of 10 - 50,000 poises at 300°C.

3. A resin composition as claimed in Claim 1 wherein the polyphenylene sulfide resin contains at least 70 mole % of a recurring unit represented by 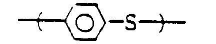 in the polymer molecule.

4. A resin composition as claimed in Claim 3 wherein said recurring unit is present in a proportion of at least 90 mole % in the polymer molecule.

5. A resin composition as claimed in any one of Claims 1 - 4 wherein the polyamide consists essentially of tetramethylene adipamide unit.

6. A resin composition as claimed in any one of Claims 1 - 4 wherein the polyamide is a copolymer of tetramethylene adipamide with one or more suitable comonomers.

7. A resin composition as claimed in Claim 6 wherein the polyamide is nylon-4,6.

8. A resin composition as claimed in any one of Claims 1 - 7 wherein the composition is filled.

9. Articles formed from the composition as claimed in any one of Claims 1 - 8.

## Patentansprüche

1. Polyphenylensulfidharzzusammensetzung, welche 61-70 Gew.-% eines Polyphenylensulfidharzes und 30-39 Gew.-% eines Polyamids, welches eine Tetramethylenadipinsäureamid-Struktureinheit enthält, umfaßt, wobei das Polyphenylensulfid und das Polyamid die einzigen polymeren Bestandteile in der Zusammensetzung sind.

2. Harzzusammensetzung nach Anspruch 1, worin das Polyphenylensulfidharz eine Schmelzviskosität von 10-50000 Poise bei 300°C hat.

3. Harzzusammensetzung nach Anspruch 1, worin das Polyphenylensulfidharz mindestens 70 Mol% einer wiederkehrenden Einheit, die durch 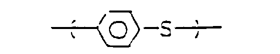 dargestellt ist, in dem Polymermolekül enthält.

4. Harzzusammensetzung nach Anspruch 3, worin diese wiederkehrende Einheit in einem Verhältnis von mindestens 90 Mol% in dem Polymermolekül vorhanden ist.

5. Harzzusammensetzung nach einem der Ansprüche 1-4, worin das Polyamid im wesentlichen aus einer Tetramethylenadipinsäureamid-Einheit besteht.

6. Harzzusammensetzung nach einem der Ansprüche 1-4, worin das Polyamid ein Copolymer von Tetramethylenadipinsäureamid mit einem oder mehreren geeigneten Comonomeren ist.

7. Harzzusammensetzung nach Anspruch 6, worin das Polyamid Nylon-4,6 ist.

8. Harzzusammensetzung nach einem der Ansprüche 1-7, worin die Zusammensetzung gefüllt ist.

9. Gegenstände, die aus der Zusammensetzung nach einem der Ansprüche 1-8 gebildet sind.

## Revendications

1. Composition de résine de polyphénylène-sulfure, qui comprend de 61 à 70% en poids d'une résine de polyphénylène-sulfure et de 30 à 39% en poids d'un polyamide contenant des unités de structure de tétraméthylène-adipamide, le polyphénylène-sulfure et le polyamide étant les seuls composants polymères dans la composition.

2. Composition de résine selon la revendication 1, dans laquelle la résine de polyphénylène-sulfure possède une viscosité à l'état fondu de 10-50.000 poises à 300°C.

3. Composition de résine selon la revendication 1, dans laquelle la résine de polyphénylène-sulfure contient au moins 70 moles % d'un motif périodique représenté par 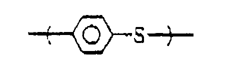 dans la molécule de polymère.

4. Composition de résine selon la revendication 3, dans laquelle ledit motif périodique est présent en une proportion d'au moins 90 moles % dans la molécule de polymère.

5. Composition de résine selon l'une quelconque des revendications 1 à 4, dans laquelle le polyamide est constitué essentiellement d'unités de tétraméthylène-adipamide.

6. Composition de résine selon l'une quelconque des revendications 1 à 4, dans laquelle le polyamide est un copolymère de tétraméthylène-adipamide avec un ou plusieurs comonomères appropriés.

7. Composition de résine selon la revendication 6, dans laquelle le polyamide est le Nylon 4,6.

8. Composition de résine selon l'une quelconque des revendications 1 à 7, dans laquelle la composition comprend des matières de charge.

9. Articles fabriqués à partir de la composition telle que revendiquée dans l'une quelconque des revendications 1 à 8.
